# DEMANDE DE BREVET EUROPEEN

(11) **EP 1 133 209 A1**
(43) Date de publication de la demande: **12.09.2001**
(21) Numéro de dépôt: 01400581.3
(22) Date de dépôt: 06.03.2001
(51) Int. Cl.: H04Q 7/38, H04M 7/00

(54) **Procédé d'appel, pour communiquer à travers un réseau informatique, d'un terminal d'un premier réseau cellulaire régional en déplacement dans la région d'un second réseau cellulaire régional**

(30) Priorité: 08.03.2000 FR 0002965
(71) Demandeur: SAGEM S.A., 75116 Paris (FR)
(72) Inventeur: n'Guyen Van-Duong, Eric, 91140 Villebon sur Yvette (FR)
(74) Mandataire: Bloch, Gérard

(57) **Abrégé**

Le réseau informatique (100) est relié aux deux réseaux cellulaires (10, 20) par l'intermédiaire de deux passerelles (1, 2), territorialement opérationnelles respectivement dans les deux régions (11, 21) des deux réseaux cellulaires (10, 20). Pour appeler,
- on notifie une requête d'appel au terminal (B),
- sur réception de cette requête, le terminal (B) appelle la passerelle (2),
- après établissement de la communication entre la passerelle (2) et le terminal (B), on met en communication l'appelant (A) et le terminal appelé (B), à travers le réseau informatique (100).

## Description

Pour réduire le coût d'une communication téléphonique longue distance, par exemple internationale, il est connu de faire transiter la communication par un réseau informatique de commutation de paquets, par l'intermédiaire de passerelles entre les deux réseaux, téléphonique et informatique, assurant la conversion des signaux téléphoniques en paquets de données et inversement. Comme exemples de réseau informatique, on peut citer l'Internet ou encore un réseau privé étendu WAN (Wide Area Network).

L'établissement d'une communication, par exemple à travers l'Internet, entre deux terminaux téléphoniques A et B, reliés à un réseau téléphonique public et respectivement situés dans deux zones géographiques, ou régions, tarifaires distinctes de ce réseau, se déroule de la façon suivante:
- le terminal A appelle une première passerelle, située dans sa zone géographique, et lui transmet le numéro d'appel du terminal B,
- sur reconnaissance des indicatifs pays et régionaux du numéro reçu, la première passerelle transmet une requête d'appel du terminal B à une seconde passerelle, située dans la zone géographique du terminal B,
- sur réception de la requête, la seconde passerelle appelle le terminal B et
- après établissement de la communication entre la seconde passerelle et le terminal B, les terminaux A et B peuvent communiquer à travers l'Internet, par l'intermédiaire des deux passerelles.

On remplace ainsi une communication téléphonique longue distance, et par conséquent coûteuse, par deux communications locales, et donc bon marché, entre les terminaux et leur passerelle.

Tout terminal cellulaire, par exemple GSM, est attaché à un réseau cellulaire couvrant une région déterminée, correspondant généralement à un territoire national. Par le terme "attaché", on entend signifier que le terminal cellulaire appartient à ce réseau cellulaire. Le terminal cellulaire d'un premier réseau régional, en "roaming", c'est-à-dire en déplacement, dans une région couverte par un second réseau régional, peut également se connecter à ce second réseau, sous réserve d'un accord entre les opérateurs des deux réseaux. Toutefois, dans ce cas, toute communication entre le terminal, en déplacement dans la région du second réseau, et un autre terminal, situé dans la région du premier réseau, sera facturée au coût d'une communication internationale.

La solution, présentée plus haut, visant à réduire le coût des communications longues distances est satisfaisante en téléphonie fixe, mais ne l'est pas totalement en téléphonie cellulaire, du fait de la mobilité du téléphone appelé.

La présente invention vise à pallier cet inconvénient.

A cet effet, l'invention concerne un procédé d'appel, pour communiquer à travers un réseau informatique, d'un terminal d'un premier réseau cellulaire régional en déplacement dans la région d'un second réseau cellulaire régional, le réseau informatique étant relié aux deux réseaux cellulaires par l'intermédiaire de deux passerelles, territorialement opérationnelles respectivement dans les deux régions des deux réseaux cellulaires, procédé dans lequel
- on notifie une requête d'appel au terminal,
- sur réception de cette requête, le terminal appelle la passerelle entre le réseau informatique et le second réseau cellulaire,
- après établissement de la communication entre la passerelle et le terminal, on met en communication l'appelant et le terminal appelé, à travers le réseau informatique.

Le terminal n'est pas appelé par la passerelle entre le réseau informatique et le premier réseau, mais appelle lui-même la passerelle du second réseau, sur notification de la requête d'appel, pour se connecter au réseau informatique. Le terminal se connecte ainsi au réseau informatique par une communication téléphonique locale.

Avantageusement, lorsqu'il pénètre dans la région du second réseau cellulaire, le terminal déclare sa présence dans ladite région à un serveur de mobilité qui lui notifie ultérieurement la requête d'appel et le met en communication avec l'appelant à travers le réseau informatique.

Avantageusement encore, la requête d'appel est notifiée par l'intermédiaire d'une passerelle, de préférence celle entre le réseau informatique et le premier réseau cellulaire.

Dans un premier mode de réalisation, la passerelle notifie la requête d'appel au terminal par l'envoi d'un message à travers un canal de signalisation de réseau cellulaire.

Dans un deuxième mode de réalisation,
- ladite passerelle appelle le terminal,
- le terminal identifie la passerelle, sans décrocher, à l'aide d'une signalisation d'identification de l'appelant, et appelle alors automatiquement la passerelle du second réseau cellulaire.

Dans un troisième mode de réalisation, le terminal étant connecté à l'Internet, on notifie la requête d'appel au terminal, par l'envoi de données à travers l'Internet.

L'invention sera mieux comprise à l'aide de la description suivante de divers modes de réalisation du procédé d'appel de l'invention en référence à la figure unique annexée qui représente un schéma d'un réseau informatique, connecté à deux réseaux cellulaires régionaux.

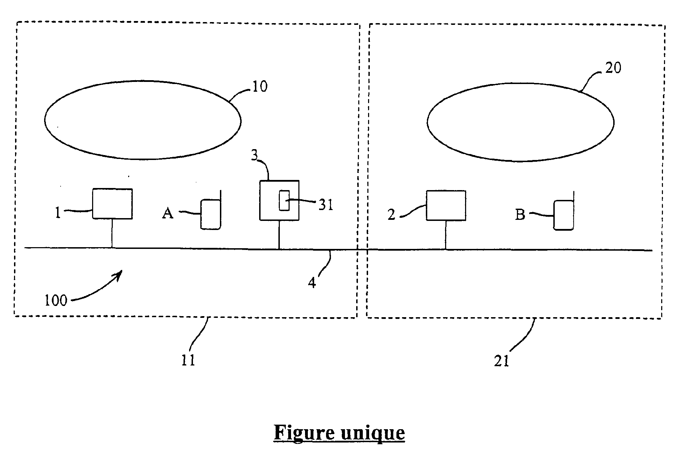

Le réseau informatique de transmission de données 100, représenté sur la figure 1, est un réseau IP, de commutation de paquets, utilisant les protocoles standards de l'Internet. Le réseau IP comprend un parc de passerelles 1, 2 entre le réseau IP et divers réseaux téléphoniques cellulaires régionaux 10, 20, ici GSM, et un serveur de mobilité 3, tous connectés à une artère centrale 4 à haut débit, ou "backbone". Chaque entité du réseau IP (passerelles, routeur et serveur) a une adresse informatique, ou "adresse IP", sur le réseau IP.

Le parc de passerelles comporte ici
- une passerelle 1 entre le réseau IP 100 et un premier réseau GSM 10 et
- une passerelle 2 entre le réseau IP 100 et un second réseau GSM 20.

Les deux réseaux GSM 10, 20 sont interconnectés et couvrent respectivement deux régions distinctes 11 et 21, correspondant ici à deux territoires nationaux.

Les passerelles ont pour fonction de convertir des signaux téléphoniques analogiques, mais qui modulent des données numériques, en paquets de données IP et inversement. Par l'intermédiaire de ces passerelles IP/GSM 1, 2, des terminaux téléphoniques ordinaires, non dotés de capacités Internet, notamment des téléphones GSM, peuvent communiquer à travers le réseau IP 100.

Chaque passerelle 1 (2) comprend une interface de connexion au réseau IP 100 et un module de téléphone cellulaire GSM, relié l'un à l'autre par l'intermédiaire d'un bloc de conversion, destiné à convertir les signaux téléphoniques radios GSM, analogiques comme ci-dessus, en paquets de données IP et inversement.

Le module de téléphone cellulaire GSM comprend les éléments classiques d'un téléphone GSM, à l'exclusion des éléments d'interface homme-machine. Il permet à la passerelle 1 (2) de se connecter au réseau cellulaire 10 (20) et de communiquer à travers celui-ci, comme un téléphone GSM ordinaire.

La zone géographique, pour laquelle la passerelle IP/GSM 1 est territorialement opérationnelle, est la région 11, c'est-à-dire la zone de couverture du réseau GSM 10. En d'autres termes, tout terminal GSM, situé dans la région 11, peut communiquer à travers le réseau IP 100 par l'intermédiaire de la passerelle 1, en payant le coût d'une communication locale.

La zone géographique, dans laquelle la passerelle IP/GSM 2 est territorialement opérationnelle, est la région 21, c'est-à-dire la zone de couverture du réseau GSM 20.

Le serveur de mobilité 3 est agencé pour gérer une table 31 de localisation d'un ensemble de terminaux téléphoniques, en l'espèce des téléphones GSM, et pour mettre en communication des terminaux, à travers le réseau IP 100, comme cela sera explicité plus loin.

Un numéro d'appel téléphonique est attribué à chaque téléphone GSM client. La table 31 contient, pour chaque téléphone de l'ensemble, un identifiant de ce téléphone, ici son numéro d'appel, et, le cas échéant, une indication relative à la passerelle territorialement opérationnelle compte tenu de la position géographique du téléphone, constituée ici par l'adresse IP de cette passerelle.

Chaque téléphone GSM appartient à un réseau GSM donné. Le numéro d'appel d'un téléphone GSM permet au serveur de mobilité 3 de déterminer la région d'origine de ce téléphone, c'est-à-dire la région de son réseau GSM. Par défaut, le serveur de mobilité 3 mémorise dans la table de localisation 31, pour chaque téléphone d'un réseau GSM donné, l'adresse IP de la passerelle opérationnelle pour la région couverte par ce réseau GSM.

Les numéros d'appel téléphonique des passerelles 1 et 2 sont préenregistrés dans les téléphones clients. Ceux-ci sont agencés pour reconnaître la région dans laquelle ils se trouvent, à l'aide de données fournies par le réseau régional, et pour sélectionner la passerelle territorialement opérationnelle pour cette région. La passerelle sélectionnée est la passerelle active, à travers laquelle le téléphone est destiné à se connecter pour communiquer à travers le réseau IP 100.

Lorsqu'un téléphone A d'un réseau GSM, par exemple du réseau 10, est en déplacement (ou en "roaming") dans la région 21 couverte par l'autre réseau GSM 20, il change de réseau GSM et déclare sa présence dans la région 21 au serveur de mobilité 3, ici par l'envoi d'un message SMS, à travers un canal de signalisation du réseau GSM 20. Le message contient le numéro d'appel du téléphone A et l'indication selon laquelle il se trouve dans la région 21 du réseau GSM 20. Sur réception de ce message, le serveur 3 mémorise l'adresse IP de la passerelle 2, territorialement opérationnelle pour la région 21, en l'associant au numéro d'appel du téléphone A, dans la table de localisation 31.

Lorsque le téléphone A quitte la région 21 et revient dans sa région 11, il change à nouveau de réseau et signale sa présence dans la région 11 au serveur 3, par l'envoi d'un autre message SMS. Le serveur 3 mémorise alors l'adresse IP de la passerelle 1, opérationnelle pour la région 11, en l'associant au numéro d'appel du téléphone A, à la place de l'adresse IP de la passerelle 2, dans la table de localisation 31.

L'établissement d'une communication "interrégionale" entre deux téléphones GSM clients, A (appelant) et B (appelé), à travers le réseau IP, va maintenant être décrit dans deux cas.

Dans le premier cas, les téléphones A et B appartiennent respectivement aux deux réseaux GSM 10 et 20 et sont respectivement situés dans les régions 11 et 21. Dans la table de localisation 31, les numéros d'appel des téléphones A et B sont respectivement associés à l'adresse IP de la passerelle 1 et à celle de la passerelle 2.

Le téléphone A appelle la passerelle 1, territorialement opérationnelle dans la région 11, à travers le réseau GSM 10. Après établissement de la communication téléphonique, le téléphone A transmet une requête d'appel du téléphone B, contenant le numéro d'appel de celui-ci, à la passerelle 1 qui la retransmet au serveur de mobilité 3.

Le serveur 3 extrait le numéro d'appel du téléphone B de la requête d'appel reçue et le recherche dans la table de localisation 31, afin d'en extraire l'adresse de passerelle, associée à ce numéro, à savoir l'adresse de la passerelle 2. Puis le serveur 3 adresse la requête d'appel du téléphone B par le téléphone A à la passerelle 2. Celle-ci appelle alors le téléphone B, à travers le réseau GSM 20. Après établissement de la communication téléphonique entre la passerelle 2 et le téléphone B, le serveur 3 met en communication les téléphones A et B à travers le réseau IP 100, par l'intermédiaire des passerelles 1 et 2.

Dans le second cas, les téléphones A et B appartiennent au même réseau GSM 10. Le téléphone appelant A est situé dans la région 11, couverte par le réseau 10, alors que le téléphone appelé B est en déplacement dans la région 21.

Dans la table de localisation 31, l'adresse IP de la passerelle 1 est associée au numéro d'appel du téléphone A.

Lorsque le téléphone B arrive dans la région 21, il détecte automatiquement sa présence dans cette région 21, à l'aide de données fournies par le réseau GSM 20, se connecte au réseau 20 et déclare sa présence dans la région 21 au serveur de mobilité 3, par l'envoi d'un message SMS à travers un canal de signalisation du réseau GSM 20. Le serveur de mobilité 3 mémorise alors l'adresse IP de la passerelle 2, dans la table 31, en l'associant au numéro d'appel du téléphone B.

Le téléphone appelant A appelle la passerelle 1, territorialement opérationnelle pour la région 11, dans laquelle il se trouve. Après établissement de la communication, le téléphone A transmet une requête d'appel du téléphone B, contenant le numéro de celui-ci, à la passerelle 1 qui la retransmet vers le serveur de mobilité 3.

Le serveur 3 extrait le numéro d'appel du téléphone B de la requête d'appel, recherche ce numéro dans la table 31 et en extrait l'adresse de passerelle associée à ce numéro, à savoir celle de la passerelle 2. Le téléphone B étant en déplacement, ou en "roaming", le serveur 3 notifie la requête d'appel au téléphone B, par l'intermédiaire de la passerelle 1, par l'envoi d'un message SMS, à travers un canal de signalisation du réseau GSM 20. Ce message contient l'indication selon il s'agit d'une notification d'une requête d'appel pour communiquer à travers le réseau IP 100. Le message SMS pourrait également être envoyé par la passerelle 2.

Sur réception du message, le téléphone B détecte qu'il s'agit d'une requête d'appel, par reconnaissance automatique de l'indication le spécifiant, et appelle alors automatiquement la passerelle 2 à travers le réseau GSM 20. Après établissement de la communication téléphonique, le téléphone B notifie à la passerelle qu'il accepte l'appel requis 2. La passerelle 2 en informe le serveur de mobilité 3 qui met alors en communication les téléphones A et B, à travers le réseau IP 100, par l'intermédiaire des passerelles 1 et 2.

Dans les deux cas décrits ci-dessus, la communication entre les deux téléphones A et B transite à travers le réseau IP 100, les deux téléphones A et B étant connectés au réseau IP par une liaison téléphonique locale avec les passerelles 1 et 2 respectivement.

La communication entre les deux téléphones A et B, telle que décrite plus haut, est "interrégionale". Elle pourrait toutefois être "intrarégionale". Cependant, dans ce cas, il n'y aurait pas d'intérêt économique à faire transiter la communication par le réseau IP.

Dans le second cas décrit, sous la commande du serveur de mobilité 3, la passerelle 1 envoie au téléphone appelé B un message SMS, pour lui notifier la requête d'appel.

Dans une première variante, pour notifier la requête d'appel au téléphone B, la passerelle 1 appelle le téléphone B, à travers les réseaux GSM 10 et 20, sous la commande du serveur de mobilité 3. Le téléphone B identifie la passerelle 1, sans décrocher, à l'aide d'une signalisation d'identification de l'appelant, ou "CLIP", contenant le numéro d'appel téléphonique de la passerelle 1, fournie par le réseau GSM 20, et appelle alors automatiquement la passerelle 2. On pourrait également envisager que ce soit la passerelle 2 qui appelle le téléphone B, pour lui notifier la requête d'appel par réception du "CLIP".

Dans une deuxième variante, sous la commande du serveur de mobilité 3, la passerelle 1 appelle le téléphone B, à travers les réseaux GSM 10 et 20, le téléphone B décroche, la passerelle 1 lui notifie la requête d'appel par l'envoi d'une signalisation spécifique puis raccroche. Dans ce cas, la notification de la requête d'appel s'effectue par une communication téléphonique, de courte durée, entre la passerelle 1 et le téléphone B. La passerelle 2 pourrait appeler le téléphone B, à la place de la passerelle 1, pour lui notifier la requête d'appel.

Dans une troisième variante, le téléphone appelé B est connecté à l'Internet à travers un réseau cellulaire, par exemple le réseau GPRS. Dans ce cas, le réseau IP 100 étant connecté à l'Internet, le serveur de mobilité 3 notifie la requête d'appel au téléphone B, par l'envoi de données à travers l'Internet et le réseau GPRS.

Le parc de passerelles pourrait comprendre plus de deux passerelles entre le réseau informatique et une pluralité de réseaux cellulaires régionaux.

L'invention pourrait également s'appliquer à tout terminal téléphonique radio, par exemple à un ordinateur portable.

## Revendications

1. Procédé d'appel, pour communiquer à travers un réseau informatique (100), d'un terminal (B) d'un premier réseau cellulaire régional (10) en déplacement dans la région (21) d'un second réseau cellulaire régional (20), le réseau informatique (100) étant relié aux deux réseaux cellulaires (10, 20) par l'intermédiaire de deux passerelles (1, 2), territorialement opérationnelles respectivement dans les deux régions (11, 21) des deux réseaux cellulaires (10, 20), procédé dans lequel
- on notifie une requête d'appel au terminal (B),
- sur réception de cette requête, le terminal (B) appelle la passerelle (2) entre le réseau informatique (100) et le second réseau cellulaire (20),
- après établissement de la communication entre la passerelle (2) et le terminal (B), on met en communication l'appelant (A) et le terminal appelé (B), à travers le réseau informatique (100).

2. Procédé selon la revendication 1, dans lequel, lorsqu'il pénètre dans la région (21) du second réseau cellulaire (20), le terminal (B) déclare sa présence dans ladite région (21) à un serveur de mobilité (3) qui lui notifie ultérieurement la requête d'appel.

3. Procédé selon l'une des revendications 1 et 2, dans lequel la requête d'appel est notifiée par l'intermédiaire d'une passerelle (1, 2).

4. Procédé selon la revendication 3, dans laquelle ladite passerelle est celle (1) entre le réseau informatique (100) et le premier réseau cellulaire (10).

5. Procédé selon l'une des revendications 3 et 4, dans lequel la passerelle (1) notifie la requête d'appel au terminal (B) par l'envoi d'un message à travers un canal de signalisation de réseau cellulaire.

6. Procédé selon l'une des revendications 3 et 4, dans lequel
- ladite passerelle (1) appelle le terminal (B),
- le terminal (B) identifie la passerelle (1), sans décrocher, à l'aide d'une signalisation d'identification de l'appelant, et appelle alors automatiquement la passerelle (2) entre le réseau informatique (100) et second réseau cellulaire (20).

7. Procédé selon l'une des revendications 1 à 3, dans lequel, le terminal (B) étant connecté à l'Internet, on notifie la requête d'appel au terminal (B), par l'envoi de données à travers l'Internet.

8. Procédé selon l'une des revendications 1 à 7, dans lequel, les numéros d'appel téléphonique d'une pluralité de passerelles, chacune territorialement opérationnelle pour une région donnée, étant préenregistrés dans le terminal (B), ledit terminal (B) sélectionne le numéro d'appel de la passerelle (2) territorialement opérationnelle pour la région (21) dans laquelle il se déplace.
